# EUROPEAN PATENT SPECIFICATION

(11) **EP 2 365 853 B1**
(45) Date of publication and mention of the grant of the patent: **14.09.2016**
(21) Application number: 09771572.6
(22) Date of filing: 19.11.2009
(51) Int. Cl.: B01D 35/157, B01D 29/15, B01D 35/153

(54) **FILTER ASSEMBLIES**
FILTERANORDNUNGEN
ENSEMBLES FILTRES

(30) Priority: 27.11.2008 GB 0821632
(43) Date of publication of application: 21.09.2011
(73) Proprietor: Fairey Industrial Ceramics Ltd, Staffordshire ST3 1PH (GB)
(72) Inventor: BURTON, Fred, Stoke-on-Trent Staffordshire ST3 1PH (GB); DELANEY, Joy, Stoke-on-Trent Staffordshire ST3 1PH (GB)
(74) Representative: Sales, Robert Reginald
(86) International application number: PCT/GB2009/002707
(87) International publication number: WO 2010/061171

(56) References cited:
- EP-A1- 2 259 858
- GB-A- 1 085 087
- US-A- 5 826 854
- US-A1- 2005 067 342
- US-A1- 2005 103 697

## Description

The present invention relates to filter assemblies, particularly but not exclusively filter assemblies for filtering water supplies.

It is known to provide filter assemblies including replaceable filter cartridges for filtering fluids such as water. Generally during replacement, the fluid supply into the filter assembly must be stopped, and therefore a valve is generally provided in the inlet feed pipe. However it is relatively uncommon to provide a valve in the outlet pipe for cost and/or space reasons, particularly in the case of domestic installations. Where an outlet valve is provided, this will often be ignored by the operative undertaking the filter replacement for reasons of convenience and speed. However if the outlet is not stopped, there can be a backflow of fluid out of the outlet which can be messy.

US5826854 discloses a fluid routing system for use in a fluid line which includes a fluid routing mechanism having a housing and a block, and a removable treatment device. The housing has an internal chamber, an inlet port for attaching to one part of a fluid line, an outlet port for attaching to another part of the fluid line, an inlet channel connecting the inlet port to the internal chamber, and an outlet channel connecting the internal chamber to the outlet port.

According to a first aspect of the present invention, there is provided a filter assembly for filtering a fluid such as water, the assembly including a housing defining an inlet port, an outlet port and a chamber therebetween, a filter member operable in use to filter fluid flowing from the inlet port to the outlet port, a valve member having an axis, the assembly being configured such that in use fluid flows from the outside of the filter member towards the axis, the valve member being at least partially receivable in the chamber and movable between an open position in which fluid flow between the inlet and the outlet ports is permitted and a closed position in which fluid flow is substantially prevented through each of the ports, wherein the valve member includes a pair of shut-off projections, operable in use so that in the closed position, each shut-off projection substantially closes a respective port, wherein the valve member includes a pair of first seals, each first seal extending around a respective shut-off projection, wherein the valve member defines an inlet channel, which in use, in the open position, is arranged to receive an inlet flow from the inlet port, the valve member defining an outlet channel, which in use, is arranged to direct an outlet flow to the outlet port, the assembly being arranged to provide an intermediate, venting position between the open and closed positions, wherein the assembly includes a venting projection which extends substantially from the first seal extending around the inlet shut-off projection in a direction opposite to a direction of movement towards the open position, characterised in that in which intermediate, venting position the venting projection partially blocks the inlet port such that a reduced inlet flow is permitted.

Possibly, the valve member is movable around the axis. Possibly, the valve member is movable around the axis and may be movable around the axis (28) through an angle of approximately 90°.

Possibly, each of the ports is orientated to permit fluid flow through the respective port in a direction which is substantially radial relative to the axis, and the inlet port may be orientated in substantially an opposite direction to the outlet part, relative to the axis.

Possibly, each shut-off projection extends substantially radially outwardly from the axis. Possibly, each first seal seals against the housing around the respective port.

Possibly, the assembly includes a mounting member which is mountable to the housing. Possibly, the assembly further includes a sump which is mountable to the mounting member, the sump including the filter member, and the sump may include a body defining a cavity, the filter member being locatable within the cavity.

Possibly, the sump includes a body defining a cavity, the filter member being locatable within the cavity. Possibly, the mounting member is mounted to the housing by a rotational movement between a free position and an engaged position.

Possibly, the assembly is arranged so that as the mounting member moves between the free and the engaged positions, the valve member is correspondingly moved between the closed and the open positions.

Possibly, the mounting member includes an engaging formation, and the valve member includes a corresponding engaging formation, so that in an assembled condition, the mounting member engaging formation engages the valve member engaging formation. Possibly, the respective formations are arranged to couple the valve member and the mounting member together, so that rotational movement of the mounting member causes corresponding rotational movement of the valve member.

Possibly, the respective formations are arranged to permit movement of the mounting member axially relative to the valve member. Possibly, the assembly includes a second seal, which extends between the inlet and outlet channels.

According to a second aspect of the present invention, there is provided a method of filtering a fluid such as water, the method including providing a filter assembly for filtering a fluid such as water as claimed in any of the preceding paragraphs.

The assembly may include any of the features described in the preceding paragraphs.

Possibly, the method further comprising venting the filter assembly to reduce a fluid pressure in the assembly, and the step of venting may take place for a predetermined period of time.

Embodiments of the present invention will now be described by way of example only and with reference to the accompanying drawings, in which:-
Figs 1A, 1B and 1C are side views of a filter assembly not according to the invention in a disassembled condition;
Figs 2A, 2B and 2C are enlarged detailed views of parts of the filter assembly as shown in Figs 1A, 1B and 1C respectively;
Figs 3A, 3B, 3C and 3D are views of the filter assembly in a partially assembled condition, Fig 3A being a side sectional view along the line indicated by arrows 3A in Fig 3B which is a side view and Fig 3C being a sectional view along the line indicated by arrows 3C in side view Fig 3D;
Figs 4A and 4B are side sectional views of part of the filter assembly again in a partially assembled condition, with a valve member in a closed condition;
Fig 5 is a side sectional view of part of the filter assembly in an assembled condition with the valve member in an open condition;
Figs 6A, 6B and 6C are side views of part of another filter assembly according to the invention in a disassembled condition;
Fig 7 is a schematic sectional view of part of the filter assembly of either Figs 1 to 5 or Fig 6 along the line indicated by arrows VII - VII in Fig 4A, showing the valve member in the closed position;
Fig 8 is a schematic sectional view of part of the filter assembly of either Figs 1 to 5 or Fig 6 along the line indicated by arrows VIII - VIII in Fig 5, showing the valve member in the open condition;
Fig 9 is a schematic sectional view of the filter assembly shown in Figs 6A, 6B and 6C in an assembled condition, with the valve member in an intermediate venting position.

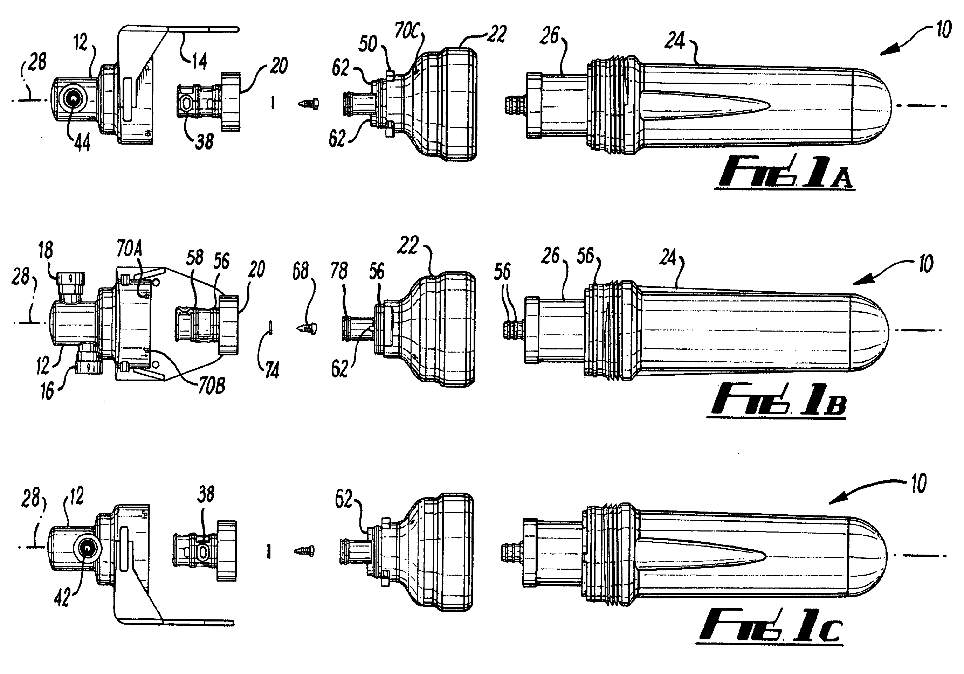

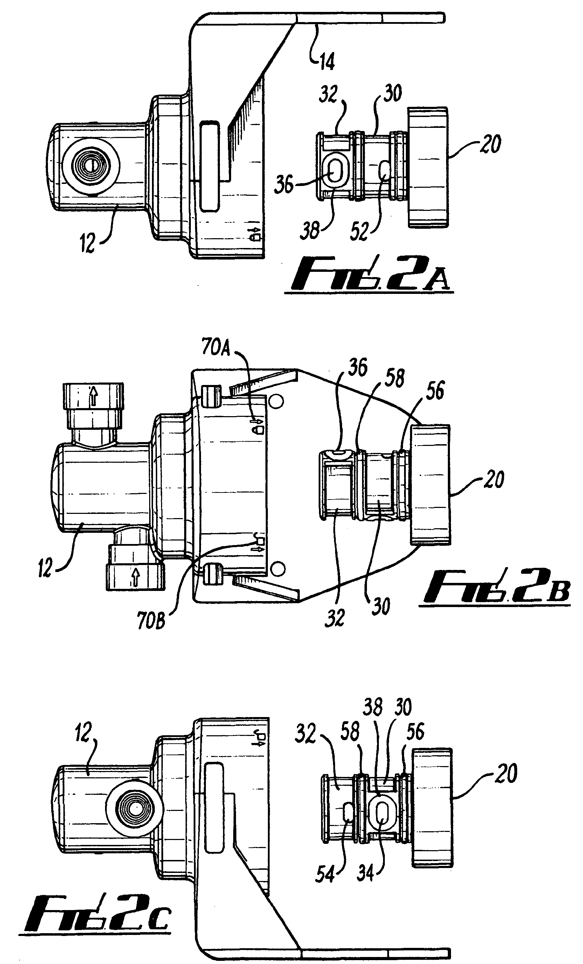

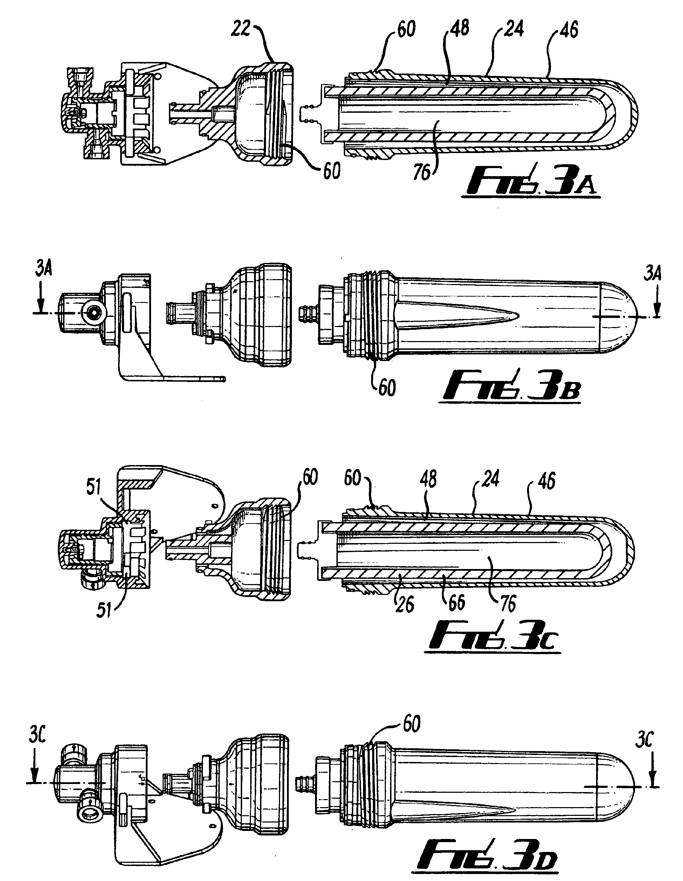

Referring to Figs 1-5, a filter assembly 10 is disclosed which is not according to the invention, the assembly 10 including a housing 12 defining a housing chamber 40. The housing 12 includes a mounting bracket 14 for mounting the assembly 10 to a surface such as a wall. The housing 12 includes an inlet connection 16 and an outlet connection 18, the inlet connection 16 defining an inlet port 42, the outlet connection 18 defining an outlet port 44.

The inlet and outlet connections 16, 18 could include suitable formations such as threaded formations and/or compression fittings for connection to pipes or pipe fittings.

The filter assembly 10 includes a valve member 20 which defines an inlet channel 30 and an outlet channel 32. With reference to a longitudinal axis 28 of the filter assembly 10, the valve member 20 includes a radially outwardly extending inlet shut off projection 34 which is located adjacent to and in an axially similar position to the inlet channel 30. The valve member 20 also includes a radially outwardly extending outlet shut off projection 36 which is located adjacent to and in an axially similar position to the outlet channel 32, and which in this example extends radially oppositely to the inlet shut off projection 34. The valve member 20 includes a pair of first seals 38, one seal 38 extending around each of the inlet and outlet shut off projections 34, 36 respectively.

Each of the ports 42, 44 is orientated to correspond with the locations of the shut off projections 34, 36 respectively, so that in the example shown in Figs 1-5, each of the ports 42, 44 permits fluid flow through the respective port in a direction which is substantially radial relative to the axis 28 and in substantially opposite direction to the flow through the other port.

The filter assembly 10 includes a mounting member 22, which includes projecting bayonet fitting lugs 50. The mounting member 22 also includes engaging formations in the form of axially extending valve member engaging projections 62.

The filter assembly 10 includes a sump 24 including a sump body 46 defining a sump cavity 48 in which a filter member 26 is receivable. The filter member 26 includes filter material 66 defining a filter member cavity 76.

In use, the filter assembly 10 could be mounted to a wall, and the housing 12 could be connected to inlet and outlet pipe work at the inlet and outlet connections 16, 18.

The filter assembly 10 is assembled as follows. The filter member 26 is located within the sump cavity 48, and the sump body 46 is mounted to the mounting member 22 by means of threaded formations 60 which are formed on the sump body 46 and within a cavity defined by the mounting member 22.

The valve member 20 is located within the housing chamber 40 and held in position by a fastener in the form of a securing screw 68 which secures the valve member 20 to the housing 12, while permitting relative rotation of the valve member 20 to the housing 12 around the axis 28. Thus, in an assembled condition, axial movement of the valve member 20 relative to the housing 12 is substantially prevented, while rotational movement of the valve member 20 around the axis 28 relative to the housing 12 is permitted. In one example, a washer 74 could be provided between the securing screw 68 and the housing 12.

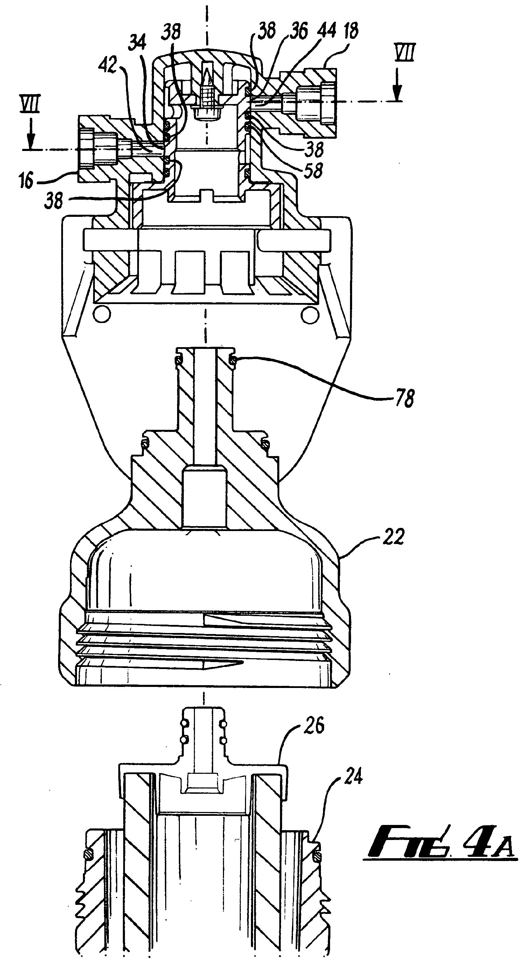

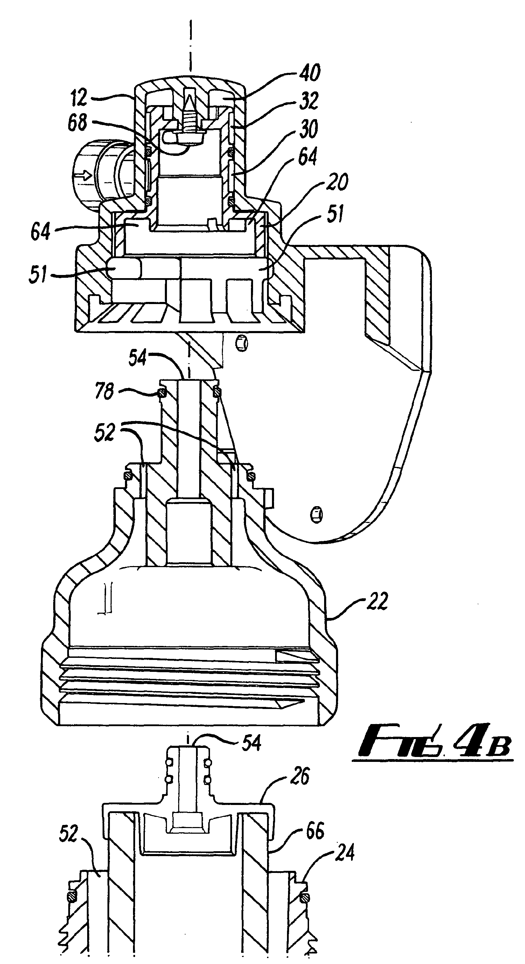

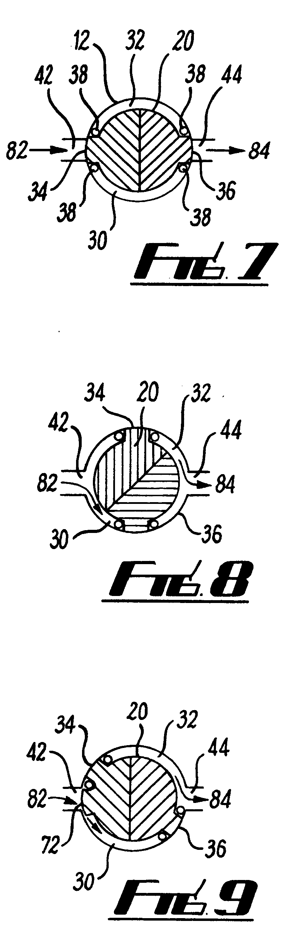

To permit assembly of the mounting member 22 with the sump 24 to the housing 12, the valve member 20 must be positioned in a closed position, in which the inlet shut off projection 34 and the outlet shut off projection 36 close the inlet port 42 and the outlet port 44 respectively, as shown in Figs 4A, 4B and 7. With the valve member 20 in this position, the mounting member 22 can be fitted to the housing 12, initially by an axial movement, and must be orientated around the axis 28 into a free or unlocked position in which the bayonet lugs 50 are received within bayonet fitting recesses 52 defined by the housing 12 and the valve member engaging projections 62 are received within corresponding engaging formations in the form of engaging recesses 64 defined by the valve member 20. To aid the user in this operation, indicator marks 70 are provided on the housing 12 and the mounting member 22, the mounting member 22 being aligned with the "unlocked" indicator mark 70B, which indicates the closed position of the valve member 20 and the unlocked position of the mounting member 22. In the unlocked position, the mounting member 22 is axially movable relative to the housing 12.

In the closed position, as shown in Figs 4A, 4B and Fig 7, the inlet and outlet shut off projections 34, 36 substantially block the inlet and outlet ports 42, 44 respectively, substantially preventing flow therethrough. This provides the advantage that both the inlet flow 82 and the outlet flow 84 are shut off. Thus, should any fluid be present in the down stream part of the system, back flow of this remaining fluid is prevented when the mounting member with the sump member 24 is removed for a purposes, for example, of changing the filter member 26.

To permit flow therethrough, the mounting member 22 is moved from the assembled, unlocked position to the assembled, engaged or locked position by rotation around the axis 28. This rotational movement causes the bayonet plugs 50 to lock within the bayonet recesses 51, preventing axial movement of the mounting member 22 relative to the housing 12. The rotational movement of the mounting member 22 causes the valve member 20 also to rotate around the axis 28 by means of the coupling of the valve member engaging formations 62 with the engaging recesses 64 of the valve member 20. As the valve member 20 rotates, the inlet shut off projection 34 and the outlet shut off projection 36 move away from the inlet and outlet ports 42, 44 respectively, permitting fluid flow therethrough into the inlet channel 30 and the outlet channel 32 respectively.

In one example, the mounting member 22 and the valve member 20 rotate through approximately 90° around the axis 28 between the unlocked, closed position and the locked, open position.

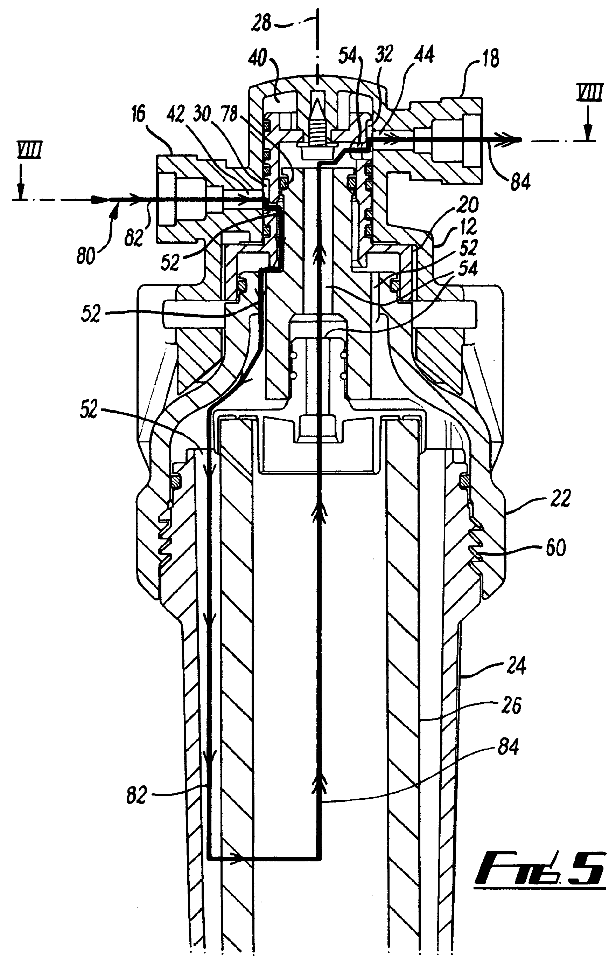

Fig 5 shows a part of the filter assembly 10, with the valve member 20 in the open position, and the mounting member 22 in the locked position. The filter assembly 10 defines a fluid flow path 80 comprising an inlet flow path 82 which is indicated by single arrow heads and an outlet flow path 84 which is indicated by double arrow heads. The inlet flow path 82 extends through the inlet port 42, the inlet channel 30, and then through inflow passages 52 defined by the valve member 20, the mounting member 22, and the sump 24. In the sump 24, the inlet flow path 82 is between the sump body 46 and the filter member 26, and then the flow path 80 passes through the filter material 66 of the filter member 26 into the filter member cavity 76. Thus, the fluid flow path 80 is from the outside of the filter material 66 towards the axis 28. This provides the advantage that after a period of use, the filter member 26 can be removed from the filter assembly 10. In one example, the filter material 66 is a cleanable material such as a ceramic material. The direction of fluid flow from the outside of the filter material 66 inwards means that dirt particles accumulate on and in the outside surface of the filter material 66 which can be cleaned relatively easily, for example by mechanical means such as brushing or scouring.

In another example, the filter material 66 is a non cleanable material such as carbon media or water treatment media, in which case the filter member 26 is removed from the filter assembly 10 and disposed of.

The outlet flow path 84 extends along the filter member cavity 76 and along outflow passages 54 defined by the filter member 26, the mounting member 22 and the valve member 20, and thence along the outlet channel 32 and through the outlet port 44.

The first seals 38 seal around the inlet shut off projection 34 and the outlet shut off projection 36 against the housing 12 around the inlet port 42 and the outlet port 44 respectively to prevent leakage of fluid when the valve member 20 is in the closed position.

The valve member includes a second seal 58 which extends between the inlet channel 30 and the outlet channel 32 to prevent contamination of the outwardly flowing fluid by the unfiltered inwardly flowing fluid. The mounting member 22 includes a third seal 78 which extends between the outflow passages 54 and the inflow passages 52, again to prevent contamination of the outwardly flowing fluid. The filter assembly 10 includes a plurality of other seals 56 to prevent fluid leakage from the assembly 10.

To disassemble the filter assembly 10 for the purposes of checking or changing the filter member 26, the mounting member 22 is moved rotationally from the locked position to the unlocked position, moving the valve member 20 from the open position to the closed position. In the unlocked position, the mounting member 22 can then be withdrawn from the housing chamber 40, and the sump body 24 can then be disengaged from the mounting member 22 to permit removal of the filter member 26. Thus, the removal of the mounting member 22 automatically shuts off both the inlet port 42 and the outlet port 44, preventing flow therethrough.

When the mounting member 22 and the sump 24 are mounted to the housing 12 and the valve member 20 moved from the closed to the open position, air can become trapped within the filter assembly 10, and this air can then become pressurised. In certain conditions, when the filter assembly 10 is then disassembled with the mounting member 22 moved to the unlocked position and the valve member 20 moved to the closed position, the trapped pressurised air could be suddenly released, causing a noise such as a pop or a bang, and/or movement of the mounting member 22 and the sump 24, which although not dangerous could be unsettling for the operator. In other conditions, the trapped air could be dissipated during operation.

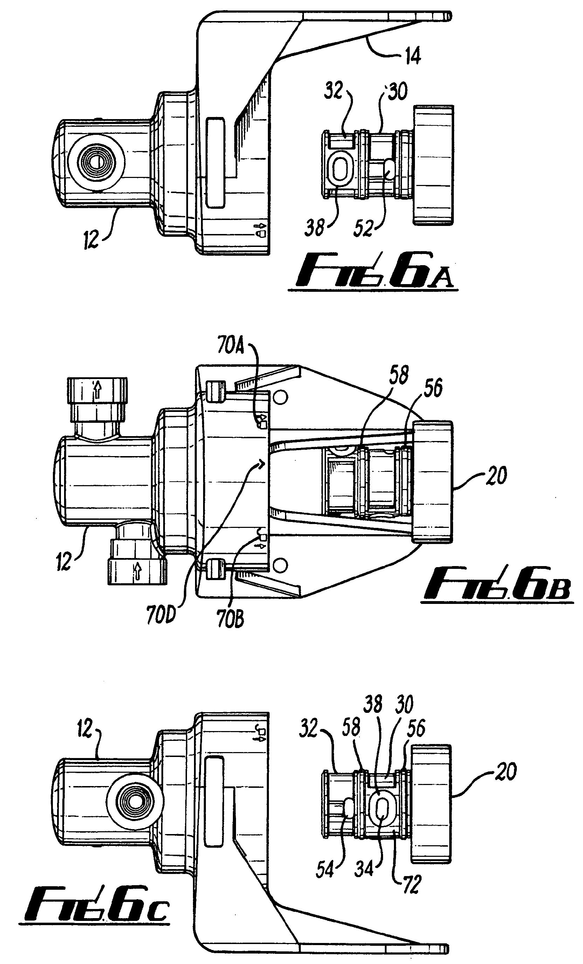

Figs 6 and 9 show a second embodiment of the invention. Many features of this embodiment are similar to those previously described, and where features are the same or are similar the same reference numerals have been used and these features will not be described again for the sake of brevity. In fact, the main difference between the embodiment shown in figs 6 and 9 are that of the previous embodiment is that, adjacent to and in an axially similar position to the first seal 38 extending around the inlet shut off projection 34, the valve member 20 includes a venting projection 72 which also extends radially outwardly.

In use, when moving the mounting member 22 between the locked and the unlocked positions, the mounting member 22 can be positioned in an intermediate, venting position as indicated by indicator mark 70D in fig 6B. In this position, as shown in fig 9, the outlet shut off projection 36 and the inlet shut off projection 34 have substantially moved away from the outlet port 44 and the inlet port 42 respectively. Flow is permitted along the outlet flow path 84 between the outlet pipe work and the outflow passages, (which flow could be outflow or backflow towards the axis 28) but the inlet port 42 is still partially blocked by the venting projection 72, which permits only a reduced inlet flow 82 into the inlet channel 30. In this embodiment, when the mounting member 22 is moved from the locked position, the venting position permits a reduction of the inlet flow, so that the fluid pressure in the filter assembly 10 is reduced by venting into the outlet pipe work. Then, when the mounting member 22 is moved to the unlocked position, the pressure of any air trapped within the filter assembly 10 has been reduced, resulting in improved, quieter operation when the mounting member 22 is moved from the locked to the unlocked position.

In one example, the mounting member 22 is positioned in the intermediate, venting position for a predetermined period. The predetermined period could be momentarily only, and could be at most 2 seconds.

The venting projection 72 could be shaped so that as the mounting member 22 is rotated from the locked to the unlocked position, a decreasing inlet flow is permitted through the inlet port 42. For example, the venting projection 72 could be rounded, graduated, and/or tapered.

Various other modifications could be made without departing from the scope of the invention. The filter assembly and its components could be formed of any suitable material and could be of any suitable size and shape.

There is thus provided a filter assembly which provides automatic shut off of inlet and outlet ports on removal of the mounting member and filter member for filter change. No additional operations are required by the user. No other valves are required in the pipe work. Thus the installation is neat and self contained, and yet can be operated by an unskilled operator, since the shut off is automatic. The shut off of both the inlet and outlet pipe work ensures that removal, checking and changing of the filter is not a messy operation, and can be undertaken by relatively unskilled personnel. The filter assembly is relatively compact.

## Claims

1. A filter assembly (10) for filtering a fluid such as water, the assembly (10) including a housing (12) defining an inlet port (42), an outlet port (44) and a chamber (40) therebetween, a filter member operable in use to filter fluid flowing from the inlet port to the outlet port, a valve member (20) having an axis (28), the assembly being configured such that in use fluid flows from the outside of the filter member towards the axis, the valve member (20) being at least partially receivable in the chamber (40) and movable between an open position in which fluid flow between the inlet (42) and the outlet (44) ports is permitted and a closed position in which fluid flow is substantially prevented through each of the ports (42, 44), wherein the valve member (20) includes a pair of shut-off projections (34, 36), operable in use so that in the closed position, each shut-off projection (34, 36) substantially closes a respective port (42, 44), wherein the valve member (20) includes a pair of first seals (38), each first seal (38) extending around a respective shut-off projection (34, 36), wherein the valve member (20) defines an inlet channel (30), which in use, in the open position, is arranged to receive an inlet flow from the inlet port (42), the valve member defining an outlet channel (32), which in use, is arranged to direct an outlet flow to the outlet port (44), the assembly being arranged to provide an intermediate, venting position between the open and closed positions, wherein the assembly includes a venting projection (72) which extends substantially from the first seal (38) extending around the inlet shut-off projection (34, 36) in a direction opposite to a direction of movement towards the open position, **characterised in that** in which intermediate, venting position the venting projection partially blocks the inlet port such that a reduced inlet flow is permitted.

2. A filter assembly according to claim 1, wherein the valve member (20) is movable around the axis (28), and may be movable around the axis (28) through an angle of approximately 90°.

3. A filter assembly according to any preceding claim, wherein each of the ports (42, 44) is orientated to permit fluid flow through the respective port (42, 44) in a direction which is substantially radial relative to the axis (28), and the inlet port may be orientated in substantially an opposite direction to the outlet part, relative to the axis( 28).

4. A filter assembly according to any preceding claim, wherein each shut-off projection (34, 36) extends substantially radially outwardly from the axis (28).

5. A filter assembly according to any preceding claim, wherein each first seal (38) seals against the housing (12) around the respective port (42, 44).

6. A filter assembly according to any preceding claim, wherein the assembly (10) includes a mounting member (22) which is mountable to the housing (12), the filter member (26) being mountable to the mounting member (22), and the assembly (10) may further include a sump (24) which is mountable to the mounting member (22), the sump (24) including the filter member (26), and the sump (24) may include a body (46) defining a cavity (48), the filter member (26) being locatable within the cavity (48).

7. A filter assembly according to claim 6, wherein the sump includes a body defining a cavity, the filter member being locatable within the cavity.

8. A filter assembly according to claims 6 or 7, wherein the mounting member (22) is mounted to the housing (12) by a rotational movement between a free position and an engaged position.

9. A filter assembly according to claim 8, wherein the assembly is arranged so that as the mounting member (22) moves between the free and the engaged positions, the valve member (20) is correspondingly moved between the closed and the open positions.

10. A filter assembly according to claim 6, or any claim dependent thereon, wherein the mounting member (22) includes an engaging formation (62), and the valve member (20) includes a corresponding engaging formation (64), so that in an assembled condition the mounting member engaging formation (62) engages the valve member engaging formation (64), and the respective formations (62, 64) may be arranged to couple the valve member (20) and the mounting member (22) together, so that a rotational movement of the mounting member (22) causes corresponding rotational movement of the valve member (20), and the respective formations (62, 64) may be arranged to permit movement of the mounting member (22) axially relative to the valve member (20).

11. A filter assembly according to any preceding claim, wherein the assembly (10) includes a second seal (58), which extends between the inlet (30) and outlet (32) channels.

12. A method of filtering a fluid such as water, the method including providing a filter assembly (10) for filtering a fluid such as water as claimed in any one of claims 1 to 11.

13. A method of filtering a fluid such as water comprising filtering the fluid using the filter assembly (10) of any one of claims 1 to 11.

14. A method as claimed in claim 13 further comprising venting the filter assembly (10) to reduce a fluid pressure in the assembly (10), and the step of venting may take place for a predetermined period of time.

## Patentansprüche

1. Filteranordnung (10) zum Filtern eines Fluids, wie Wasser, wobei die Anordnung (10) ein Gehäuse (12), das eine Einlassöffnung (42) definiert, eine Auslassöffnung (44) und eine Kammer (40) dazwischen, ein Filterelement, das im Gebrauch betreibbar ist, um Fluid zu filtern, das von der Einlassöffnung zu der Auslassöffnung fließt, ein Ventilelement (20), das eine Achse (28) aufweist, enthält, wobei die Einheit derart konfiguriert ist, dass im Gebrauch Fluid von der Außenseite des Filterelements in Richtung zu der Achse fließt, wobei das Ventilelement (20) zumindest teilweise in der Kammer (40) aufnehmbar ist und zwischen einer offenen Position, in der ein Fluidfluss zwischen den Einlass- (42) und den Auslass- (44) Öffnungen möglich ist, und einer geschlossenen Position, in der ein Fluidfluss durch jede der Öffnungen (42, 44) im Wesentlichen verhindert ist, bewegbar ist, wobei das Ventilelement (20) ein Paar von Absperrvorsprüngen (34, 36) enthält, die im Gebrauch betreibbar sind, so dass in der geschlossenen Position jeder Absperrvorsprung (34, 36) im Wesentlichen eine zugehörige Öffnung (42, 44) verschließt, wobei das Ventilelement (20) ein Paar von ersten Dichtungen (38) enthält, wobei sich jede erste Dichtung (38) um einen zugehörigen Absperrvorsprung (34, 36) herum erstreckt, wobei das Ventilelement (20) einen Einlasskanal (30) definiert, der im Gebrauch in der offenen Position angeordnet ist, um einen Einlassfluss von der Einlassöffnung (42) aufzunehmen, wobei das Ventilelement einen Auslasskanal (32) definiert, der im Gebrauch angeordnet ist, um einen Auslassfluss zu der Auslassöffnung (44) zu leiten, wobei die Anordnung angeordnet ist, um eine intermediäre Entlüftungsposition zwischen den offenen und geschlossenen Positionen vorzusehen, wobei die Anordnung einen Entlüftungsvorsprung (72) enthält, der sich im Wesentlichen von der ersten Dichtung (38), die sich um den Einlass-Absperrvorsprung (34, 36) herum in einer Richtung entgegengesetzt zu einer Richtung der Bewegung zu der offenen Position hin, erstreckt, **dadurch gekennzeichnet, dass** der Entlüftungsvorsprung die Einlassöffnung in der intermediären Entlüftungsposition teilweise blockiert, so dass ein reduzierter Einlassfluss möglich ist.

2. Filteranordnung gemäß Anspruch 1, wobei das Ventilelement (20) um die Achse (28) herum bewegbar ist, und um die Achse (28) herum über einen Winkel von ungefähr 90° bewegbar sein kann.

3. Filteranordnung gemäß irgendeinem vorhergehenden Anspruch, wobei jede der Öffnungen (42, 44) orientiert ist, um einen Fluidfluss durch die jeweilige Öffnung (42, 44) in einer Richtung zu ermöglichen, die im Wesentlichen relativ zu der Achse (28) radial ist, und wobei die Einlassöffnung im Wesentlichen in einer entgegengesetzten Richtung zu der Auslassöffnung relativ zu der Achse (28) orientiert sein kann.

4. Filteranordnung gemäß irgendeinem vorhergehenden Anspruch, wobei jeder Absperrvorsprung (34, 36) sich im Wesentlichen von der Achse (28) nach radial nach außen erstreckt.

5. Filteranordnung gemäß irgendeinem vorhergehenden Anspruch, wobei jede erste Dichtung (38) um die jeweilige Öffnung (42, 44) herum gegen das Gehäuse (12) abdichtet.

6. Filteranordnung gemäß irgendeinem vorhergehenden Anspruch, wobei die Anordnung (10) ein Montageelement (22) enthält, das an das Gehäuse (12) montierbar ist, wobei das Filterelement (26) an das Montageelement (22) montierbar ist, und wobei die Anordnung (10) weiterhin einen Sammelbehälter (24) enthalten kann, der an dem Montageelement (22) montierbar ist, wobei der Sammelbehälter (24) das Filterelement (26) enthält, und wobei der Sammelbehälter (24) einen Körper (46) enthalten kann, der einen Hohlraum (48) definiert, wobei das Filterelement (26) innerhalb des Hohlraums (48) angeordnet werden kann.

7. Filteranordnung gemäß Anspruch 6, wobei der Sammelbehälter einen Körper enthält, der einen Hohlraum definiert, wobei das Filterelement in dem Hohlraum angeordnet werden kann.

8. Filteranordnung gemäß Anspruch 6 oder 7, wobei das Montageelement (22) an das Gehäuse (12) durch eine Drehbewegung zwischen einer freien Position und einer in Eingriffsposition montiert ist.

9. Filteranordnung gemäß Anspruch 8, wobei die Anordnung angeordnet ist, so dass während sich das Montagelement (22) zwischen der freien und der Eingriffsposition bewegt, das Ventilelement (20) entsprechend zwischen den geschlossenen und offenen Positionen bewegt wird.

10. Filteranordnung gemäß Anspruch 6, oder irgendeinem davon abhängigen Anspruch, wobei das Montagelement (22) eine Eingriffsformation (62) enthält, und wobei das Ventilelement (20) eine korrespondierende Eingriffsformation (64) enthält, so dass die Eingriffsformation (62) des Montageelements in einem zusammengesetzten Zustand die Eingriffsformation (64) des Ventilelements in Eingriff nimmt, und wobei die jeweiligen Formationen (62, 64) angeordnet sein können, um das Ventilelement (20) und das Montageelement (22) miteinander zu koppeln, so dass eine Drehbewegung des Montageelements (22) eine entsprechende Drehbewegung des Ventilelements (20) verursacht, und wobei die jeweiligen Formationen (62, 64) angeordnet sein können, um eine Bewegung des Montageelements (22) axial relativ zu dem Ventilelement (20) zu ermöglichen.

11. Filteranordnung gemäß irgendeinem vorhergehenden Anspruch, wobei die Anordnung (10) eine zweite Dichtung (58) enthält, die sich zwischen den Einlass-(30) und Auslass- (32) Kanälen erstreckt.

12. Verfahren zum Filtern eines Fluids, wie Wasser, wobei das Verfahren das Vorsehen einer Filteranordnung (10) zum Filtern eines Fluids, wie Wasser, wie in einem der Ansprüche 1 bis 11 beansprucht, enthält.

13. Verfahren zum Filtern eines Fluids, wie Wasser, aufweisend ein Filtern des Fluids unter Verwendung der Filteranordnung (10) gemäß einem der Ansprüche 1 bis 11.

14. Verfahren gemäß Anspruch 13, weiterhin aufweisend ein Entlüften der Filteranordnung (10), um einen Fluiddruck in der Anordnung (10) zu reduzieren, und wobei der Schritt des Entlüftens für eine vorbestimmte Zeitperiode stattfinden kann.

## Revendications

1. Ensemble de filtre (10) pour filtrer un fluide tel que de l'eau, l'ensemble (10) comprenant un boîtier (12) définissant un orifice d'entrée (42), un orifice de sortie (44) et une chambre (40) entre ces deux orifices, un élément de filtre pouvant fonctionner en cours d'utilisation pour filtrer du fluide s'écoulant depuis l'orifice d'entrée jusqu'à l'orifice de sortie, un élément de soupape (20) ayant un axe (28), l'ensemble étant configuré de telle sorte qu'en cours d'utilisation, du fluide s'écoule depuis l'extérieur de l'élément de filtre en direction de l'axe, l'élément de soupape (20) étant au moins partiellement recevable dans la chambre (40) et mobile entre une position ouverte dans laquelle l'écoulement de fluide entre l'orifice d'entrée (42) et l'orifice de sortie (44) est permis et une position fermée dans laquelle l'écoulement de fluide est sensiblement empêché au travers de chacun des orifices (42, 44), dans lequel l'élément de soupape (20) comprend une paire de saillies de fermeture (34, 36), pouvant fonctionner en cours d'utilisation de telle sorte que dans la position fermée, chaque saillie de fermeture (34, 36) ferme sensiblement un orifice respectif (42, 44), dans lequel l'élément de soupape (20) comprend une paire de premiers joints d'étanchéité (38), chaque premier joint d'étanchéité (38) s'étendant autour d'une saillie de fermeture respective (34, 36) dans lequel l'élément de soupape (20) définit un canal d'entrée (30), qui, en cours d'utilisation, dans la position ouverte, est agencé pour recevoir un écoulement d'entrée provenant de l'orifice d'entrée (42), l'élément de soupape définissant un canal de sortie (32), qui, en cours d'utilisation, est agencé pour diriger un écoulement de sortie vers l'orifice de sortie (44), l'ensemble étant agencé pour fournir une position d'évacuation de l'air intermédiaire entre les positions ouverte et fermée, dans lequel l'ensemble comprend une saillie d'évacuation de l'air (72) qui se prolonge substantiellement depuis le premier joint d'étanchéité (38) s'étendant autour de la saillie de fermeture d'entrée (34, 36) dans un sens opposé à un sens de déplacement dirigé vers la position ouverte, **caractérisé en ce que** dans ladite position d'évacuation de l'air intermédiaire, la saillie d'évacuation de l'air bloque partiellement l'orifice d'entrée de telle sorte qu'un écoulement d'entrée réduit est autorisé.

2. Ensemble de filtre selon la revendication 1, dans lequel l'élément de soupape (20) est mobile autour de l'axe (28) et peut être déplacé autour de l'axe (28) selon un angle d'environ 90 °.

3. Ensemble de filtre selon l'une quelconque des revendications précédentes, dans lequel chacun des orifices (42, 44) est orienté pour permettre un écoulement de fluide au travers de l'orifice respectif (42, 44) dans un sens qui est sensiblement radial par rapport à l'axe (28), et l'orifice d'entrée peut être orienté dans un sens sensiblement opposé à l'orifice de sortie, par rapport à l'axe (28).

4. Ensemble de filtre selon l'une quelconque des revendications précédentes, dans lequel chaque saillie de fermeture (34, 36) s'étend sensiblement radialement vers l'extérieur depuis l'axe (28).

5. Ensemble de filtre selon l'une quelconque des revendications précédentes, dans lequel chaque premier joint (38) assure l'étanchéité contre le boîtier (12) autour de l'orifice respectif (42, 44).

6. Ensemble de filtre selon l'une quelconque des revendications précédentes, dans lequel l'ensemble (10) comprend un élément de montage (22) qui peut être monté sur le boîtier (12), l'élément de filtre (26) pouvant être monté sur l'élément de montage (22), et l'ensemble (10) peut en outre comprendre un carter (24) qui peut être monté sur l'élément de montage (22), le carter (24) comprenant l'élément de filtre (26), et le carter (24) peut comprendre un corps (46) définissant une cavité (48), l'élément de filtre (26) pouvant être placé à l'intérieur de la cavité (48).

7. Ensemble de filtre selon la revendication 6, dans lequel le carter comprend un corps définissant une cavité, l'élément de filtre pouvant être placé à l'intérieur de la cavité.

8. Ensemble de filtre selon les revendications 6 ou 7, dans lequel l'élément de montage (22) est monté sur le boîtier (12) par un mouvement de rotation entre une position libre et une position engagée.

9. Ensemble de filtre selon la revendication 8, dans lequel l'ensemble est agencé de telle sorte que lorsque l'élément de montage (22) se déplace entre la position libre et la position engagée, l'élément de soupape (20) est déplacé de façon correspondante entre la position fermée et la position ouverte.

10. Ensemble de filtre selon la revendication 6 ou l'une quelconque des revendications qui en dépend, dans lequel l'élément de montage (22) comprend une formation de mise en prise (62) et l'élément de soupape (20) comprend une formation de mise en prise correspondante (64), de sorte que dans un état assemblé, la formation de mise en prise de l'élément de montage (62) met en prise la formation de mise en prise de l'élément de soupape (64), et les formations respectives (62, 64) peuvent être agencée pour coupler l'élément de soupape (20) et l'élément de montage (22) en même temps, de sorte qu'un mouvement de rotation de l'élément de montage (22) provoque un mouvement de rotation correspondant de l'élément de soupape (20), et les formations respectives (62, 64) peuvent être agencées pour permettre le déplacement de l'élément de montage (22) axialement par rapport à l'élément de soupape (20).

11. Ensemble de filtre selon l'une quelconque des revendications précédentes, dans lequel l'ensemble (10) comprend un second joint d'étanchéité (58) qui s'étend entre les canaux d'entrée (30) et de sortie (32).

12. Procédé de filtration d'un fluide tel que de l'eau, le procédé comprenant l'étape consistant à fournir un ensemble de filtre (10) pour filtrer un fluide tel que de l'eau selon l'une quelconque des revendications 1 à 11.

13. Procédé de filtration d'un fluide tel que de l'eau, comprenant l'étape consistant à filtrer le fluide à l'aide de l'ensemble de filtre (10) selon l'une quelconque des revendications 1 à 11.

14. Procédé selon la revendication 13, comprenant en outre l'étape consistant à évacuer l'air de l'ensemble de filtre (10) pour réduire une pression de fluide dans l'ensemble (10), et l'étape consistant à évacuer l'air peut avoir lieu pour une période de temps prédéterminée.
